(19) Europäisches Patentamt
European Patent Office
Office européen des brevets

(11) EP 3 822 324 B1

(12) **EUROPEAN PATENT SPECIFICATION**

(45) Date of publication and mention of the grant of the patent:
**01.05.2024 Bulletin 2024/18**

(21) Application number: **19834129.9**

(22) Date of filing: **26.06.2019**

(51) International Patent Classification (IPC):
***C09D 11/101*** *(2014.01)* ***C09D 11/03*** *(2014.01)*
***C09D 11/06*** *(2006.01)* ***C09D 11/105*** *(2014.01)*

(52) Cooperative Patent Classification (CPC):
**C09D 11/105; C09D 11/03; C09D 11/06; C09D 11/101;** B41F 1/16

(86) International application number:
**PCT/JP2019/025490**

(87) International publication number:
**WO 2020/012965 (16.01.2020 Gazette 2020/03)**

(54) **ACTIVE ENERGY RAY-CURABLE INK COMPOSITION FOR OFFSET PRINTING, AND METHOD FOR PRODUCING PRINTED MATTER USING SAME**

MIT AKTIVEN ENERGIESTRAHLEN HÄRTBARE TINTENZUSAMMENSETZUNG FÜR OFFSETDRUCK UND VERFAHREN ZUR HERSTELLUNG VON DRUCKMATERIAL UNTER VERWENDUNG DAVON

COMPOSITION D’ENCRE DURCISSABLE PAR RAYONNEMENT D’ÉNERGIE ACTIVE, DESTINÉE À L’IMPRESSION OFFSET ET PROCÉDÉ DE PRODUCTION D’UN MATÉRIAU IMPRIMÉ L’UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2018 JP 2018131166**
**06.12.2018 JP 2018228724**

(43) Date of publication of application:
**19.05.2021 Bulletin 2021/20**

(73) Proprietor: **Sakata INX Corporation**
**Osaka-shi, Osaka 550-0002 (JP)**

(72) Inventors:
- **HISHINUMA, Keishiro**
  **Osaka-shi, Osaka 550-0002 (JP)**
- **OMI, Naoki**
  **Osaka-shi, Osaka 550-0002 (JP)**

(74) Representative: **V.O.**
**P.O. Box 87930**
**2508 DH Den Haag (NL)**

(56) References cited:
**WO-A1-2017/044334**
**WO-A1-2020/012965**
**JP-A- H08 501 589**
**JP-A- 2002 097 397**
**JP-A- 2002 338 848**
**JP-A- 2003 119 230**
**JP-A- 2018 065 912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 822 324 B1

**Description**

TECHNICAL FIELD

The present invention relates to an active energy ray-curable ink composition for offset printing and a method of producing a printed product using the ink composition.

BACKGROUND ART

Offset printing is a printing process that utilizes the water repellency of an oilbased ink composition for offset printing (hereinafter abbreviated as "ink composition" or "ink" where appropriate). The offset printing process, which differs from a relief printing process using an uneven printing plate, uses an even printing plate provided with lipophilic image portions and hydrophilic non-image portions. In the offset printing process using such a printing plate, a dampening solution is brought into contact with the printing plate to form water films on the non-image portions. An ink composition is then delivered to the printing plate. The delivered ink composition does not adhere onto the oleophobic non-image portions of the water films but adheres only onto the lipophilic image portions. In this way, an image is formed on the printing plate with the ink composition. The resulting image is transferred to a blanket and then to a paper sheet to complete printing.

Besides the offset printing using the dampening solution as described above, a dry offset process using a printing plate having non-image portion composed of silicone resin has been also put into practical use. In this printing process, the non-image portions are formed not by repellency of the ink composition to the dampening solution, but by repellency of the ink composition to the silicone resin. Apart from these differences, the dry offset printing has a lot in common with the offset printing process using the dampening solution. Accordingly, the term "offset printing" is used in this specification as a concept common to a wet printing process using a dampening solution and a dry printing process.

If the ink composition adhering onto the surfaces of the printed sheets yielded by the offset printing is insufficiently dried, set-off occurs when the printed sheets are stacked or the ink composition adheres to fingers with which the printed sheets are touched. Such printed sheets cannot be transferred to the subsequent step or commercially distributed as products. Thus, an additional step is required to dry the ink composition on the surfaces of the printed sheets after the offset printing. In order to carry out such a process in a short time, printing with active energy ray-curable ink compositions have been prevailing. Such types of ink compositions contain polymerizable compounds, such as monomers and oligomers, and polymerization initiators that polymerize the polymerizable compounds after irradiation of the polymerizable compounds with active energy rays, such as UV rays or electron beams. Thus, irradiation with the active energy rays to undried products that have been printed with the ink composition polymerizes the polymerizable compound. As a result, the ink composition on the printed products instantaneously transforms into a nonsticky (i.e., dried) film. Various ink compositions involving such a drying process have been proposed (for example, PTLs 1 and 2). Examples of the active energy rays used in this process include UV rays and electron beams. UV rays are often selected in view of operation costs and handling characteristics of devices.

Various industrial fields have been promoting activities for reduction in environmental burden, while sharing the common final goal of global environmental conservation. The printing ink industry has also been carrying out activities that promote reduction in environmental burden from the various viewpoints. The products conforming to the idea of such activities are labeled with certification marks. Examples of such certification marks include the NL regulation mark (indicating ink that complies with NL regulation), the vegetable mark, the green printing (GP) mark, and the clione mark. Under such a background, Japan Printing Ink Makers Association has newly established the system of an ink green mark (hereinafter referred to as "IG mark"). The IG mark is a system that mainly refers to the proportions of biomass-originated components among the components of ink compositions as indices to accordingly rank the environmental compliance levels of the ink compositions into three grades. In other words, the system aims at a reduction in environmental burden and is characterized by promotion of replacement of raw fossil-resource-originated materials with raw biomass-originated materials.

Also for the aforementioned active energy ray-curable ink compositions, products dryable by irradiation of less UV rays and energy saving products dryable with light beams of light emitting diodes (LED) having low power consumption have been commercially available, and the movements toward a reduction in environmental burden has been developed, similar to other ink compositions. Unfortunately, UV inks inevitably contain large amounts of monomers or oligomers, which fact precludes use of large amounts of biomass-originated components. Hence, the current accreditation criteria of the IG mark do not include the proportions of biomass-originated components, but employ indices on environmentally compliant properties, such as aptitude for recycling and energy saving.

CITATION LIST

PATENT LITERATURES

PTL 1: Japanese Unexamined Patent Application Publication No. 2012-102217
PTL 2: Japanese Patent No. 4649952

SUMMARY OF INVENTION

TECHNICAL PROBLEM

Under such a background, it is socially valuable to increase the proportions of biomass-originated components also in the active energy ray-curable ink compositions, which is of great significance. Unfortunately, monomers and oligomers used in active energy ray-curable ink compositions for offset printing have low compatibility with biomass-originated materials used in common ink compositions for offset printing, which precludes the use of the traditional materials at present. Use of raw biomass-originated materials is significant for resource protection because these materials are renewable. However, use of raw edible biomass-originated materials, such as animal and vegetable oils, will cause a new hunger problem. In the past, use of bioethanol as a renewable energy source in motor fuel was hot topic. It is still fresh in our minds that consumption of a large amount of corn for production of bioethanol has provoked controversy from the viewpoint of a hunger problem.

The present invention has been made in view of the above-mentioned technical background. An object of the present invention is to provide an active energy ray-curable ink composition for offset printing that contains an increased amount of raw biomass-originated material and can maintain its basic characteristics, for example, compatibility, without a hunger problem.

SOLUTION TO PROBLEM

The present inventors, who have carried out intensive studies to solve the problems as described above, have found that a combination of an active energy ray-curable ink composition for offset printing that contains a compound having an ethylenically unsaturated bond; a photopolymerization initiator, a rosin-modified alkyd resin that is a condensation polymer of a polyhydric alcohol with an acid component containing a resin acid, a fatty acid, and a polybasic acid, and having a solubility parameter (SP value) of 9.0 to 11.0 (cal/ $cm^3)^{1/2}$ as measured by turbidimetric titration and an acid value of 1 to 50 mg KOH/g, wherein the rosin-modified alkyd resin has an oil-length of 30-85, the oil length indication the ratio of the mas of the fatty acid moiety to the mass of the entire rosin-modified alkyd resin, and a specific liquid component having no ethylenically unsaturated bond and being an animal-originated or plant-originated oil or a modified product thereof having an SP value of 9.0 (cal/ $cm^3)^{1/2}$ to less than 11.0 (cal/ $cm^3)^{1/2}$ can solve the above-mentioned problem. The present inventors have thereby completed the present invention. In the present invention, the animal-originated or plant-originated oil used as the specific liquid component has an SP value of 9.0 to 11.0 (cal/ $cm^3)^{1/2}$. Most oils having such a high SP value are inedible and are unlikely to cause a hunger problem. The present invention has been completed based on these findings.

ADVANTAGEOUS EFFECTS OF INVENTION

The present invention provides an active energy ray-curable ink composition for offset printing that contains an increased amount of raw biomass-originated material and can maintain its basic characteristics, for example, compatibility, without a hunger problem.

DESCRIPTION OF EMBODIMENTS

An embodiment of an active energy ray-curable ink composition for offset printing according to the present invention and an embodiment of a method of producing a printed product according to the invention will now be described. It should be noted that the invention is not limited to the following embodiments and that any variation can appropriately be made within the scope of the invention.

Active Energy Ray-Curable Ink Composition for Offset Printing

The active energy ray-curable ink composition for offset printing according to the present invention (hereinafter also simply referred to as "ink composition") is used in offset litho printing and can be cured by irradiation with active energy rays, such as UV rays or electron beams. As described below, the ink composition of the invention contains a compound having one or more ethylenically unsaturated bonds (for example, a monomer and/or an oligomer) and a photopolymerization initiator. Radicals are produced from the photopolymerization initiator after irradiation with active energy rays and causes the molecules of the compound with ethylenically unsaturated bond(s) to be cured into a high molecular weight. Thus, irradiation of the viscous ink composition immediately after printing with active energy rays can instantaneously cure the ink composition into a film that is dried and free of tackiness.

The ink composition according to the present invention can be cured with any active energy ray that can cleave the chemical bond of the photopolymerization initiator to produce radicals. Examples of such an active energy ray include UV rays and electron beams. Among such active energy rays, preferred are UV rays from the viewpoint of the operational costs and handling characteristics of a device. UV rays usable as active energy rays may have a wavelength of, for example, 400 nm or less, although the wavelength can be determined according to the absorption wavelength of the photopolymerization initiator that is used. Examples of an UV-ray radiator generating such UV rays include metal halide lamps, high-pressure mercury lamps, excimer lamps filled with noble gases, and UV light emitting diodes (LED).

The ink composition according to the present invention, which contains the compound having ethylenically unsaturated bond(s) and the photopolymerization initiator, further contains a predetermined rosin-modified alkyd resin and a predetermined liquid component. In the present invention, the predetermined liquid component is referred to as "specific liquid component". The predetermined rosin-modified alkyd resin and the specific liquid component are essential components of the present invention. Among them, the rosin-modified alkyd resin is a condensation polymer of a polyhydric alcohol with an acid component containing a resin acid, a fatty acid, and a polybasic acid, and has a solubility parameter (SP value) of 9.0 to 11.0 $(cal/cm^3)^{1/2}$ as measured by turbidimetric titration and an acid value of 1 to 50 mg KOH/g and a specific oil length as defined in claim 1. An alkyd resin, which is made of fatty acid, is usable as one of the components of a common non-active ray-curable ink composition for offset printing for acquiring the biomass count (the content of the biomass component) in the composition. However, the alkyd resin cannot be used in an active energy ray-curable ink composition due to poor compatibility. In contrast, the present invention uses a rosin-modified alkyd resin having a predetermined SP value not causing a problem of poor compatibility. The specific liquid component has no ethylenically unsaturated bond and is an animal-originated or plant-originated oil or a modified product thereof having an SP value of 9.0 to less than 11.0 $(cal/cm^3)^{1/2}$. Oils having such an SP value are useful in that they can not only solve the problem of poor compatibility of the active energy ray-curable ink composition but also acquire a biomass count without causing a hunger problem because many of such oils are inedible.

The ink composition according to the present invention may contain a coloring component (In the present invention, the coloring component also includes any component imparting a white color or metal color to the ink composition). An ink composition according to the present invention containing a coloring component is suitable for, for example, printing of images and letters or characters. An ink composition according to the invention containing no coloring component is suitable for, for example, coating. The ink composition according to the invention is directed at not only common printed products intended for, for example, transmission of information or appreciation but also various printed products produced by offset printing, for example, printing of packages. The components of the ink composition will now be described.

Compounds Having Ethylenically Unsaturated Bonds

Compounds having ethylenically unsaturated bonds are polymerized by radicals produced by degradation of photopolymerization initiators as described below. These compounds are called monomers or oligomers. A variety of polymers with ethylenically unsaturated bonds, which have a higher molecular weight than oligomers are commercially available. Such polymers can be cross-linked mutually or with monomers or oligomers into high molecular weights. Such polymers having ethylenically unsaturated bonds may also be used together with the monomers and oligomers.

The monomers has an ethylenically unsaturated bond or bonds and is polymerized as described above. The monomer before polymerization is a liquid component having a relatively low molecular weight in many cases. The monomer also serves as a solvent that dissolves a resin component to produce a varnish or is used to adjust the viscosity of an ink composition. Examples of the monomer include monofunctional monomers each having one ethylenically unsaturated bond per molecule and polyfunctional monomers each having two or more ethylenically unsaturated bonds per molecule. Polyfunctional monomers, which can be cross-linked during curing of the ink composition, contribute to an increase in hardening rate and formation of a strong film. Although monofunctional monomers do not have such cross-linkability, they contribute to a reduction in cure shrinkage accompanied by cross-link. The monomers can be used in combination as required.

Examples of the monofunctional monomers include alkyl acrylates, such as methyl (metha)acrylate, ethyl (metha)acrylate, butyl (metha)acrylate, hexyl (metha)acrylate, octyl (metha)acrylate, and dodecyl (metha)acrylate; (metha) acrylic acids, ethylene oxide adduct (metha)acrylate, propylene oxide adduct (metha)acrylate, isobornyl (metha)acrylate, cyclohexyl (metha)acrylate, tricyclodecane monomethylol (metha)acrylate, 2-hydroxyethyl (metha)acrylate, 2-hydroxypropyl (metha)acrylate, 3-hydroxypropyl (metha)acrylate, 2-hydroxybutyl (metha)acrylate, 4-hydroxybutyl (metha)acrylate, hydroxypentyl (metha)acrylate, 2-hydroxy-3-phenoxypropyl (metha)acrylate, 2-hydroxy-3-butoxypropyl (metha)acrylate, 2-hydroxy-3-methoxypropyl (metha)acrylate, diethylene glycol mono(metha)acrylate, triethylene glycol mono(metha)acrylate, poly(ethylene glycol) mono(metha)acrylate, dipropylene glycol mono(metha)acrylate, polypropylene glycol) mono(metha)acrylate, glycerol mono(metha)acrylate, acryloxyethyl phthalate, 2-(metha)acroyloxyethyl-2-hydroxyethyl phthalate, 2-(metha)acryloyloxypropyl phthalate, β-carboxyethyl (metha)acrylate, (metha)acrylic acid dimer, ω-carboxy polycaprolactone mono(metha)acrylate, dimethylaminoethyl (metha)acrylate, diethylaminoethyl (metha)acrylate, N-vinylpyrrolidone, N-vinylformamide, and (metha)acryloylmorpholine. These monofunctional monomers can be used alone or in combination. Throughout the specification, the term "(metha)acrylate" denotes "acrylate and/or methacrylate" and the term "(metha)acrylic acid" denotes "acrylic acid and/or methacrylic acid".

Examples of the polyfunctional monomers include difunctional monomers, such as ethylene glycol di(metha)acrylate, diethylene glycol di(metha)acrylate, triethylene glycol di(metha)acrylate, poly(ethylene glycol) di(metha)acrylate, propylene glycol di(metha)acrylate, di(propylene glycol) di(metha)acrylate, tri(propylene glycol) di(metha)acrylate, polypropylene glycol) di(metha)acrylate, butyrene glycol di(metha)acrylate, pentyl glycol di(metha)acrylate, neopentyl glycol di(metha)acrylate, hydroxypivalyl hydroxypivalate di(metha)acrylate, hydroxypivalyl hydroxypivalate dicaprolactonate di(metha)acrylate, 1,6-hexanediol di(metha)acrylate, 1,2-hexanediol di(metha)acrylate, 1,5-hexanediol di(metha)acrylate, 2,5-hexanediol di(metha)acrylate, 1,7-heptanediol di(metha)acrylate, 1,8-octanediol di(metha)acrylate, 1,2-octanediol di(metha)acrylate, 1,9-nonanediol di(metha)acrylate, 1,2-decanediol di(metha)acrylate, 1,10-decanediol di(metha)acrylate, 1,2-decanediol di(metha)acrylate, 1,12-dodecanediol di(metha)acrylate, 1,2-dodecanediol di(metha)acrylate, 1,14-tetradecanediol di(metha)acrylate, 1,2-tetradecanediol di(metha)acrylate, 1,16-hexadecanediol di(metha)acrylate, 1,2-hexadecanediol di(metha)acrylate, 2-methyl-2,4-pentanediol di(metha)acrylate, 3-methyl-1,5-pentanediol di(metha)acrylate, 2-methyl-2-propyl-1,3-propanediol di(metha)acrylate, 2,4-dimethyl-2,4-pentanediol di(metha)acrylate, 2,2-diethyl-1,3-propanediol di(metha)acrylate, 2,2,4-trimethyl-1,3-pentanediol di(metha)acrylate, dimethyloloctane di(metha)acrylate, 2-ethyl-1,3-hexanediol di(metha)acrylate, 2,5-dimethyl-2,5-hexanediol di(metha)acrylate, 2-methyl-1,8-octanediol di(metha)acrylate, 2-butyl-2-ethyl-1,3-propanediol di(metha)acrylate, 2,4-diethyl-1,5-pentanediol di(metha)acrylate, 1,2-hexanediol di(metha)acrylate, 1,5-hexanediol di(metha)acrylate, 2,5-hexanediol di(metha)acrylate, 1,7-heptanediol di(metha)acrylate, 1,8-octanediol di(metha)acrylate, 1,2-octanediol di(metha)acrylate, 1,9-nonanediol di(metha)acrylate, 1,2-decanediol di(metha)acrylate, 1,10-decanediol di(metha)acrylate, 1,2-decanediol di(metha)acrylate, 1,12-dodecanediol di(metha)acrylate, 1,2-dodecanediol di(metha)acrylate, 1,14-tetradecanediol di(metha)acrylate, 1,2-tetradecanediol di(metha)acrylate, 1,16-hexadecanediol di(metha)acrylate, 1,2-hexadecanediol di(metha)acrylate, 2-methyl-2,4-pentane di(metha)acrylate, 3-methyl-1,5-pentanediol di(metha)acrylate, 2-methyl-2-propyl-1,3-propanediol di(metha)acrylate, 2,4-dimethyl-2,4-pentanediol di(metha)acrylate, 2,2-diethyl-1,3-propanediol di(metha)acrylate, 2,2,4-trimethyl-1,3-pentanediol di(metha)acrylate, dimethyloloctane di(metha)acrylate, 2-ethyl-1,3-hexanediol di(metha)acrylate, 2,5-dimethyl-2,5-hexanediol di(metha)acrylate, 2-butyl-2-ethyl-1,3-propanediol di(metha)acrylate, 2,4-diethyl-1,5-pentanediol di(metha)acrylate, tricyclodecane dimethylol di(metha)acrylate, tricyclodecane dimethylol dicaprolactonate di(metha)acrylate, bisphenol A tetraethylene oxide adduct di(metha)acrylate, bisphenol F tetraethylene oxide adduct di(metha)acrylate, bisphenol S tetraethylene oxide adduct di(metha)acrylate, hydrogenated bisphenol A tetraethylene oxide adduct di(metha)acrylate, hydrogenated bisphenol F tetraethylene oxide adduct di(metha)acrylate, hydrogenated bisphenol A di(metha)acrylate, hydrogenated bisphenol F di(metha)acrylate, bisphenol A tetraethylene oxide adduct dicaprolactonate di(metha)acrylate, and bisphenol F tetraethylene oxide adduct dicaprolactonate di(metha)acrylate; trifunctional monomers, such as glycerol tri(metha)acrylate, trimethylolpropane tri(metha)acrylate, trimethylolpropane tricaprolactonate tri(metha)acrylate, trimethylolethane tri(metha)acrylate, trimethylolhexane tri(metha)acrylate, trimethyloloctane tri(metha)acrylate, and pentaerythritol tri(metha)acrylate; and tetrafunctional monomers, such as trimethylolpropane tetra(metha)acrylate, pentaerythritol tetra(metha)acrylate, pentaerythritol tetracaprolactonate tetra(metha)acrylate, diglycerol tetra(metha)acrylate, ditrimethylolpropane tetra(metha)acrylate, ditrimethylolpropane tetracaprolactonate tetra(metha)acrylate, ditrimethylolethane tetra(metha)acrylate, ditrimethylolbutane tetra(metha)acrylate, ditrimethylolhexane tetra(metha)acrylate, ditrimethylol octane tetra(metha)acrylate, dipentaerythritol penta(metha)acrylate, dipentaerythritol hexa(metha)acrylate, tripentaerythritol hexa(metha)acrylate, tripentaerythritol hepta(metha)acrylate, tripentaerythritol octa(metha)acrylate, and tripentaerythritol polyalkylene oxide hepta(metha)acrylate. These polyfunctional monomers can be used alone or in combination.

Another type of monomer is an epoxidized vegetable oil acrylate, which is produced by acrylic modification of an epoxidized vegetable oil. The epoxidized vegetable oil acrylate is produced as follows: Double bonds in unsaturated vegetable oil is epoxidized with an oxidizing reagent, for example, peracetic acid or perbenzoic acid into epoxy groups; and then the epoxy groups are reacted with (metha)acrylic acid by ring-opening addition polymerization. The unsaturated

vegetable oil is a triglyceride at least one fatty acid of which has at least one unsaturated carbon-carbon bond. Examples of the unsaturated vegetable oil include hemp-seed oil, linseed oil, perilla oil, oiticica oil, olive oil, cacao-seed oil, kapok oil, kaya oil, mustard oil, apricot kernel oil, tung oil, kukui nut oil, walnut oil, poppy seed oil, sesame oil, safflower oil, radish seed oil, soybean oil, chaulmoogra oil, camellia oil, corn oil, rapeseed oil, niger seed oil, rice bran oil, palm oil, castor oil, sunflower oil, grape seed oil, almond oil, pine seed oil, cottonseed oil, palm oil, peanut oil, and dehydrated castor oil. Such a type of monomer is originated from vegetable oil and thus useful for increasing the amount of biomass components in the ink composition. Various epoxidized vegetable oil acrylates are commercially available and usable in the present invention.

The oligomer is also a polymerizable component as described above. Since intrinsically having a relatively high molecular weight, the oligomer is also used to impart appropriate viscosity and elasticity to an ink composition. Examples of the oligomer include epoxy-modified (metha)acrylates, such as esters of (metha)acrylic acids and hydroxyl groups produced by the ring opening reaction of the epoxy groups of the epoxy compounds, for example, epoxy resins, in the presence of acids or bases; rosin-modified epoxy acrylates; polyester-modified (metha)acrylates, such as esters of (metha)acrylic acids and the terminal hydroxyl groups of polycondensates containing dibasic acids and diols; polyether-modified (metha)acrylates, such as esters of the terminal hydroxyl groups of polyether compounds and (metha)acrylic acids; and urethane-modified (metha)acrylates, such as esters of (metha)acrylic acids and the terminal hydroxyl groups of condensates containing polyisocyanate compounds and polyol compounds. Such oligomers are commercially available, for example, from Daicel Cytec Co., Ltd. under product names of EBECRYL series, from SARTOMER under product names of CN and SR series, from TOAGOSEI CO., LTD. under product names of ARONIX M-6000, 7000, and 8000 series, ARONIX M-1100, ARONIX M-1200, and ARONIX M-1600, and from SHIN-NAKAMURA CHEMICAL CO. LTD. under a product name of NK OLIGO. These oligomers can be used alone or in combination.

Polymers having ethylenically unsaturated bonds are components that are polymerized together with monomers and/or oligomers. Since having high molecular weights before being irradiated with active energy rays, the polymer molecules are useful for enhancing the viscoelasticity of an ink composition. A compound of such polymer molecules is, for example, dissolved or dispersed in a low-viscosity monomer liquid for use. Examples of the polymers having ethylenically unsaturated bonds include poly(diallyl phthalate), acrylic resins having unreacted unsaturated groups, and acryl-modified phenolic resins. Among them, preferred is poly(diallyl phthalate), which has particularly significant compatibility with monomers and oligomers.

The content of the compound having ethylenically unsaturated bond(s) in the ink composition ranges preferably from 30 to 70 mass%, more preferably 40 to 60 mass%. A content within such a range of the compound having ethylenically unsaturated bond(s) can ensure the compatibility between high hardening characteristics and high printability. The content of the polymer having ethylenically unsaturated bond(s) ranges preferably from 0 to 50 mass%, more preferably from 0 to 30 mass%, further preferably from 0 to 20 mass%. A content within such a range of the polymer is preferred because appropriate viscoelasticity can be imparted to the ink composition to prevent, for example, misting from occurring and the high hardening characteristics of the ink composition can be ensured.

Photopolymerization Initiator

The photopolymerization initiator produces radicals by irradiation with active energy rays. The resultant radicals polymerize compounds having the ethylenically unsaturated bonds to cure the ink composition. Any photopolymerization initiator may be used that can produce radicals by irradiation with active energy rays.

Examples of the photopolymerization initiator include benzophenone, diethylthioxanthone, 2-methyl-1-(4-methylthio)phenyl-2-morpholinopropan-1-one, 4-benzoyl 4'-methyldiphenyl sulfide, 1-chloro-4-propoxythioxanthone, isopropylthioxanthone, 2-hydroxy-2-methyl-1-phenylpropane-1-one, 1-hydroxycyclohexyl phenyl ketone, bis(2,6-dimethoxybenzoyl) (2,4,4-trimethylpentylphosphine) oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butane-1-one. Such photopolymerization initiators are commercially available, for example, from BASF under product names of Irgacure 907, Irgacure 369, Irgacure 184, Irgacure 379, Irgacure 819, and TPO and from Lamberti under a product name of DETX. These photopolymerization initiators can be used alone or in combination.

The content of the photopolymerization initiator in the ink composition ranges preferably from 1 to 20 mass%, more preferably from 2 to 15 mass%, further preferably from 2 to 13 mass%. A content within such a range of the photopolymerization initiator in the ink composition is preferred because of high compatibility between sufficient surface hardening characteristics, high internal hardening characteristics, and the cost of the ink composition.

Rosin-Modified Alkyd Resin

The rosin-modified alkyd resin is a condensation polymer of a polyhydric alcohol with an acid component

containing a resin acid, a fatty acid, and a polybasic acid, and has a solubility parameter (SP value) of 9.0 to 11.0 (cal/ $cm^3)^{1/2}$ as measured by turbidimetric titration and an acid value of 1 to 50 mg KOH/g and have a specific oil length as defined in claim 1. Such a rosin-modified alkyd resin can be used to achieve high compatibility in the ink composition while increasing the content of biomass-originated components in the ink composition. Since the rosin-modified alkyd resin has resin acid backbones in its polymer chains or side chains, it has high affinity to a pigment and thus achieves high dispersibility of the pigment and preferred gloss of the ink composition.

The ink composition according to the present invention contains monomer and oligomer components. These components have relatively high SP values. Thus, the rosin-modified alkyd resin used in the ink composition according to the present invention has an SP value of 9.0 to 11.0 (cal/ $cm^3)^{1/2}$, which is high as for this type of material. Thus, the ink composition according to the invention has high compatibility. The rosin-modified alkyd resin more preferably has a solubility parameter (SP value) of 9.3 to 10.0 (cal/ $cm^3)^{1/2}$, further preferably 9.5 to 10.0 (cal/ $cm^3)^{1/2}$, as measured by turbidimetric titration.

Calculation of a solubility parameter (SP value) as measured by turbidimetric titration will now be described. The SP value can be measured by a simple turbidimetric titration and be calculated based on the following expression by K. W. Suh and J. M. Corbett (see J. Appl. Polym. Sci., 12, 2359 (1968)):

$$\text{SP value} = (V_{ml}^{1/2}\cdot\delta H+V_{mh}^{1/2}\cdot\delta D)/(V_{ml}^{1/2}+V_{mh}^{1/2})$$

In turbidimetric titration, a specimen (0.5g) is dissolved in a 10 mL of good solvent, such as toluene or trimethylolpropane triacrylate (TMPTA). A poor solvent n-hexane having a low SP value is then added to read a titer H (mL) at the cloud point. A poor solvent ethanol having a high SP value is also added to another toluene solution to read a titer D (mL) at the cloud point. These titers are substituted into the expressions described below to calculate $V_{ml}$, $V_{mh}$, $\delta H$, and $\delta D$, which are then substituted into the expression described above.

The molecular volumes and SP values of the solvents used in the turbidimetric titration are as described below.

Molecular volume $\varphi 0$ of the good solvent: toluene: 106.28 mL/mol
TMPTA: 279.55 mL/mol
Molecular volume $\varphi l$ of the poor solvent n-hexane with low SP value: 131.61 mL/mol
Molecular volume cph of the poor solvent ethanol with high SP value: 58.39 mL/mol
SP values of the solvents: toluene: 9.14; and TMPTA: 9.88, n-hexane: 7.28; and ethanol: 12.58

$$V_{ml} = (\varphi 0\cdot\varphi l)/\{(1-VH)\cdot\varphi l+VH\cdot\varphi 0\}$$

$$V_{mh} = (\varphi 0\cdot\varphi h)/\{(1-VD)\cdot\varphi h+VD\cdot\varphi 0\}$$

$$VH = H/(M+H)$$

$$VD = D/(M+D)$$

$$\delta H = (\delta 0\cdot M)/(M+H)+(\delta l\cdot H)/(M+H)$$

$$\delta D = (\delta 0\cdot M)/(M+D)+(\delta l\cdot D)/(M+D)$$

$\delta 0$: SP value of the good solvent
$\delta l$: SP value of the poor solvent with low SP value
$\delta h$: SP value of the poor solvent with high SP value
H: titer (mL) of the poor solvent with low SP value
D: titer (mL) of the poor solvent with high SP value
M: volume (mL) of the good solvent

VH: volume fraction (%) of the titer of the poor solvent with low SP value
VD: volume fraction (%) of the titer of the poor solvent with high SP value

The rosin-modified alkyd resin has an acid value of 1 to 50 mg KOH/g, which acid value of 50 mg KOH or less can prevent troubles, for example, abnormal emulsification of the ink composition for offset printing that contains such a rosin-modified alkyd resin. The acid value ranges preferably from 1 to 25 mg KOH, more preferably from 1 to 10 mg KOH.
The rosin-modified alkyd resin preferably has a weight-average molecular weight of 1000 to 70000. A weight-average molecular weight of 1000 or more is preferred, which achieves high dispersibility of a pigment and imparts high viscoelasticity to the ink composition. A weight-average molecular weight of 70000 or less is preferred, which achieves high solubility and significantly high handling ability of the ink composition.
As described above, the rosin-modified alkyd resin is a condensation polymer of a polyhydric alcohol with an acid component containing a resin acid, a fatty acid, and a polybasic acid. These components will now be described.
Resin acids refers to abietic acids and isomers thereof that are contained in rosins, and derivatives of such abietic acids and isomers. The rosins are non-volatile components of pine resins gathered from plants of the family Pinaceae and is primarily composed of abietic acid and isomers thereof. Examples of the abietic acid and the isomers thereof include abietic acid, neoabietic acid, palustric acid, pimaric acid, isopimaric acid, and dehydroabietic acid. These acids each have a carboxyl group and can produce ester with polyhydric alcohol, as will be described below. Such a resin acid can be introduced in the rosin-modified alkyd resin to enhance the affinity to a pigment and increase the proportion of biomass-originated components in the resulting rosin-modified alkyd resin.
Abietic acid and the isomers thereof each have only one carboxyl group, which can be modified to introduce multiple carboxyl groups. For example, abietic acid, which is a trans-diene compound, can be thermally isomerized into a cis-diene compound. A Diels-Alder reaction of the resulting cis-diene compound with a dienophile compound having multiple carboxyl groups, for example, maleic acid or 1,2-cyclohexenedicarboxylic acid can introduce multiple carboxyl groups in an abietic acid backbone. Polymerization of multiple molecules of abietic acid or an isomer thereof produces a polymerized rosin. Such a compound also has multiple carboxyl groups. A derivative of abietic acid or isomer thereof refers to such a compound.
Since the rosin essentially contain resin acids, the rosin themselves may be used instead of the resin acids. Known rosins are categorized into several types based on production processes and subsequent chemical treatments and available in the invention. Examples of such rosins include gum rosins, wood rosins, tall rosins, disproportionated rosins, hydrogenated rosins, and polymerized rosins. The rosins may be modified by a Diels-Alder reaction as described above. From the viewpoint of storage stability, it is preferred to use a rosin that has no conjugated double bond or less conjugated double bonds. Examples of such a rosin include disproportionated rosins and hydrogenated rosins. It should be appreciated that the rosin having conjugated double bonds can also be used without a problem, although the synthesized resin has a slightly low storage stability.
Fatty acid is produced by hydrolysis of natural oil, such as animal oil or vegetable oil, has one carboxyl group, and thus can produce ester with polyhydric alcohol, as will be described below. Such fatty acid can be introduced in the rosin-modified alkyd resin to increase the proportion of biomass-originated components in the resulting rosin-modified alkyd resin. From such a viewpoint, fatty acids are used that achieves an oil length of about 30 to 85, which indicates the ratio (mass%) of the mass of the fatty acid moiety to the mass of the entire resin. It is more preferred to use fatty acid that can achieve an oil length of about 50 to 85.
As stated above, one of the features of the production process of the rosin-modified alkyd resin according to the present invention is to select a fatty acid that can prepare a rosin-modified alkyd resin having an SP value of 9.0 to 11.0 (cal/ $cm^3)^{1/2}$ as measured by turbidimetric titration. This value is relatively high as for this type of resin. The prepared rosin-modified alkyd resin, which has such a high SP value, can have high compatibility with a monomer or oligomer also having a high SP value.
Examples of the fatty acid include caprylic acid, pelargonic acid, capric acid, lauric acid, myristic acid, pentadecylic acid, palmitic acid, margaric acid, stearic acid, oleic acid, linoleic acid, arachidic acid, and behenic acid. The fatty acids each have a carboxyl group and a relatively high SP value. Fatty acid tends to have a high SP value as the carbon number decreases. From such a viewpoint, the present invention uses preferably $C_{8-16}$, more preferably $C_{8-14}$ fatty acids. Fatty acids having such high SP values can be used alone or in combination to increase the SP value of the prepared rosin-modified alkyd resin. From such a viewpoint, preferred are caprylic acid, pelargonic acid, capric acid, lauric acid, myristic acid, pentadecylic acid, and palmitic acid. These fatty acids each have a Fedors SP value of 9.18 or more. This does not indicate that a fatty acid having a lower SP value is unusable. A fatty acid having a low SP value can also be used without a problem in combination with another fatty acid having a high SP value. In any case, these fatty acids can be appropriately combined such that the prepared rosin-modified alkyd resin has a solubility parameter (SP value) of 9.0 to 11.0 (cal/ $cm^3)^{1/2}$ as measured by turbidimetric titration. Although a fatty acid may be unsaturated or saturated, the fatty acid preferably has one or no unsaturated bond per molecule to avoid, for example, coloration due to deterioration. Fatty acids having two or more unsaturated bonds per molecule, such as oleic acid, linoleic acid,

and eleostearic acid, are preferably subjected to an oxidation treatment to epoxidize the double bonds. Such modified fatty acids can be also used in the present invention. These fatty acids can be used alone or in combination.

As described above, fatty acids with a smaller carbon number are preferred. From such a viewpoint, fatty acids derived from palm oil or palm kernel oil are preferably used. Such oil contains $C_{12-14}$ fatty acids and thus can be used to increase the SP value of the rosin-modified alkyd resin. Since the final SP value of the rosin-modified alkyd resin should be 9.0 to 11.0 (cal/ $cm^3)^{1/2}$, other fatty acids originated from different oils may also be used within the range of the SP value.

A polybasic acid has multiple carboxyl groups and is condensation-polymerizable with a polyhydric alcohol, which will be described below. Any compound having carboxyl groups and used in synthesis of the alkyd resin may be used that have at least two carboxyl groups or acid anhydrides thereof.

Examples of such a compound include phthalic anhydride, isophthalic acid, terephthalic acid, adipic acid, trimellitic acid, 1,2-cyclohexanedicarboxylic acid, 1,3-cyclohexenedicarboxylic acid, 1,4-cyclohexenedicarboxylic acid, hexahydrophthalic anhydride, 5-sodiosulfoisophthalic acid, fumaric acid, benzoic acid, tert-butylbenzoic acid, tetrahydrophthalic anhydride, maleic anhydride, succinic acid, succinic anhydride, fumaric acid, sebacic acid, azelaic acid, tetrabromophthalic anhydride, methylhimic anhydride, tetrachlorophthalic anhydride, hexahydrophthalic anhydride, pyromellitic dianhydride, trimellitic anhydride, and methylcyclohexenedicarboxylic anhydride. These compounds can used alone or in combination.

Polyhydric alcohols produce esters with acid components containing resin acids, fatty acids, and polybasic acids, which has been described above, and polymerizes these components. Any polyhydric alcohol having at least two hydroxyl groups used in synthesis of the alkyd resin can be used.

Examples of such a compound include ethylene glycol, 1,3-propanediol, 1,2-propanediol, 1,4-butandiol, diethylene glycol, triethylene glycol, poly(ethylene glycol), di(propylene glycol), 1,3-butandiol, neopentyl glycol, spiro glycol, dioxane glycol, adamantane diol, 3-methyl-1,5-pentanediol, methyl octanediol, 1,6-hexanediol, 1,4-cyclohexanedimethanol, 2-methylpropane-1,3-diol, 3-methylpentane-1,5-diol, hexamethylene glycol, octylene glycol, 9-nonanediol, 2,4-diethyl-1,5-pentanediol, difunctional phenolic ethylene oxide-modified compounds, such as bisphenol A, difunctional phenolic propylene oxide-modified compounds, such as bisphenol A, ethylene oxides of bisphenol A, propylene oxide copolymer-modified compounds, copolymerized polyether polyol of ethylene oxide and propylene oxide, polycarbonate diol, adamantane diol, polyether diol, polyester diol, and polycaprolactone diol. These compound can be used alone or in combination.

In order to adjust the molecular weight of the rosin-modified alkyd resin, the acid component may also contain a monobasic acid in addition to the fatty acid. Examples of the monobasic acid include benzoic acid, acetic acid, propionic acid, and butyric acid.

A process of preparing the rosin-modified alkyd resin using these compounds will now be described. The rosin-modified alkyd resin is prepared by a reaction of an acid component containing a resin acid, a fatty acid, and a polybasic acid with a polyhydric alcohol. The reaction procedure involves placing these materials into a reactor, adding a small amount of solvent, for example, xylene and heating the reactor while supplying inert gas, such as nitrogen gas, and condensation-polymerizing the materials while removing the resultant water by azeotropic distillation. The reaction temperature ranges, but should not be limited to, from about 170 to 250°C and the reaction time about 5 to 25 hours. The acid value of the reaction mixture is monitored according to elapse of the reaction time to determine the completion of the reaction. In other words, the completion of the reaction can be determined when the acid value reaches a stationary state. The condensation polymerization can be accelerated by removal by distillation of water generated by the condensation polymerization from the reaction system or use of a catalyst for condensation reaction. Examples of the catalyst include tetrabutyl zirconate, monobutyl tin oxide, zirconium naphthenate, and tetrabutyl titanate.

As stated above, the rosin-modified alkyd resin preferably has a weight-average molecular weight of about 1000 to 70000. The weight-average molecular weight of the rosin-modified alkyd resin is determined by the proportion of the acid component and the polyhydric alcohol. Thus, it is preferred to carry out small-scale pilot synthesis to determine the reaction conditions and the types of the raw materials and then to make the shift to large-scale synthesis.

The type and amount of the raw feedstock fatty acid should be selected such that the rosin-modified alkyd resin resulting from the condensation polymerization has a solubility parameter (SP value) of 9.0 to 11.0 (cal/ $cm^3)^{1/2}$ as measured by turbidimetric titration. Thus, it is preferred to carry out small-scale pilot synthesis to determine the reaction conditions and the types of the raw materials and then make the shift to large-scale synthesis as in determination of the weight-average molecular weight described above. As stated above, the rosin-modified alkyd resin has a solubility parameter (SP value) of more preferably 9.3 to 10.0 (cal/ $cm^3)^{1/2}$, further preferably 9.5 to 10.0 (cal/ $cm^3)^{1/2}$.

As stated above, the rosin-modified alkyd resin after the condensation polymerization has an acid value of 1 to 50 mg KOH. An acid value of 50 mg KOH or less can prevent troubles, for example, abnormal emulsification of the ink composition for offset printing that contains such a rosin-modified alkyd resin. The acid value ranges preferably from 1 to 25 mg KOH, more preferably from 1 to 10 mg KOH. Since the acid value of the rosin-modified alkyd resin after completion of the reaction is determined by the balance between the acid component and the polyhydric alcohol, it is

preferred to carry out small-scale pilot synthesis to determine the reaction conditions and the types of the raw materials and then make the shift to large-scale synthesis as in determination of the weight-average molecular weight described above.

In the production process, the acid component containing a resin acid, a fatty acid, and a polybasic acid is reacted with the polyhydric alcohol. Alternatively, the rosin-modified alkyd resin may be prepared by any other process. For example, a vegetable oil and/or a fatty acid ester is subjected to transesterification with a polyhydric alcohol to prepare a reaction intermediate, and then the reaction intermediate is condensation-polymerized in the presence of any one of optional materials (1) to (3) described below. In another process, a vegetable oil and/or a fatty acid ester thereof is subjected to transesterification with any one of optional materials (1) to (3) described below to prepare a reaction intermediate, and then the reaction intermediate is condensation-polymerized in the presence of a polyhydric alcohol:

(1) a resin acid and a polybasic acid
(2) a resin acid derivative having two or more carboxyl groups, and
(3) a resin acid derivative having two or more carboxyl groups, and a polybasic acid

Specific Liquid Component

The specific liquid component has no ethylenically unsaturated bond and is an animal-originated or plant-originated oil or a modified product thereof having an SP value of 9.0 (cal/ $cm^3)^{1/2}$ to less than 11.0 (cal/ $cm^3)^{1/2}$. Oils having such SP values are useful because they can not only solve a problem of poor compatibility of an active energy ray-curable ink composition but also acquire the biomass count without a hunger problem due to inedibility of many of such oils. The present invention pays attention to the potentiality of the specific liquid component that simultaneously solves these two problems, i.e., to achieve high compatibility and acquire the biomass count without a hunger problem. Use of the specific liquid component together with the rosin-modified alkyd resin is essential for the invention.

In detail, polymeric components in active energy ray-curable ink compositions, in other words, compounds having ethylenically unsaturated bond(s) generally have high polarities than components, for example, oils in ink compositions involving other drying techniques. Thus, components having an SP value of less than 9.0 (cal/ $cm^3)^{1/2}$ have poor compatibility with polymeric components in active energy ray-curable ink compositions and are not preferred from the viewpoint of acquisition of the biomass count. In contrast, components having an SP value of 9.0 to less than 11.0 (cal/ $cm^3)^{1/2}$ have high compatibility with components, for example, monomers and thus do not cause such a problem. While most oils, such as soybean oil and linseed oil, each having an SP value of less than 9.0 (cal/ $cm^3)^{1/2}$ are edible, many of the oils and the modified products thereof each having an SP value of 9.0 to less than 11.0 (cal/ $cm^3)^{1/2}$ and used in the present invention are inedible, which can give a high biomass count to an ink composition without a hunger problem. It should be noted that the SP value in this context refers to a parameter of solubility measured by turbidimetric titration, which has been described with respect to the rosin-modified alkyd resin.

As described above, the specific liquid component has no ethylenically unsaturated bond and is not rapidly polymerizable in the presence of radicals. Thus, the specific liquid component maintains flowability (flow properties) of the ink composition and contributes to an improvement in levelling of the ink composition even during the polymerization of the components, such as monomers in the presence of radicals in the ink composition after printing. Hence, printing using the ink composition containing the specific liquid component according to the present invention can produce a highly glossy printed product.

Although the specific liquid component has high compatibility with polymeric components as described above and thus no upper limit on the amount to be added from the viewpoint of the compatibility, the upper limit of the amount of the specific liquid component in the ink composition is determined to be 80 mass% in the present invention, to maintain hardening characteristics. The upper limit is preferably 50 mass%, more preferably 30 mass%. The lower limit of the amount of the specific liquid component in the ink composition is determined to be 1 mass%. The lower limit is preferably 3 mass%. The specific liquid component is preferably fluid at room temperature. The phrase "fluid at room temperature" refers to fluid at a temperature of the storage environment or printing environment of the ink composition. Room temperature is, for example, about 0 to 50°C.

Although the term "animal-originated or plant-originated oils" usually refers to triglyceride, such as animal or vegetable oil, the term in the present invention broadly refers to animal-originated or plant-originated oily substances. Modified products of the animal-originated or plant-originated oils refer to those each having an SP value after chemical modification regardless of the original SP value. Examples of the modified products include fatty acid esters with triglyceride having a high SP value, such as castor oil and tall oil; curable castor oils, polymeric castor oils, unsaturated animal or vegetable oils and epoxidized products of the fatty acids of the unsaturated animal or vegetable oils, polymerized products of cashew nut shell liquid, and cashew nut shell liquid-modified derivatives. It should be noted that the phrase "have no ethylenically unsaturated bond" refers to having no substituent group, such as acryloyl group, methacryloyl group, and vinyl group, rapidly polymerizable in the presence of radicals.

Unsaturated animal or vegetable oils and epoxidized products of the fatty acids of the unsaturated animal or vegetable oils (hereinafter abbreviated to "epoxidized oils" as required) are esters of fatty acids each having at least one epoxy group with alcohol. Examples of the epoxidized oil include triglycerides having epoxy group(s) and esters of fatty acids each having epoxy group(s) with monoalcohol or polyalcohol. Examples of the alcohol include, but should not be limited to, $C_{1-14}$ alcohols, such as glycerol, methanol, ethanol, propanol, 2-propanol, and 2-ethylhexanol. Polyhydric alcohols, such as glycerol, may each have at least one condensed (in other words, ester-linked) fatty acid having at least one epoxy group. Alternatively, the polyhydric alcohols may be each condensed with two or more condensed fatty acids having at least one epoxy group. In this case, two or more fatty acids may be independently selected. Since the epoxidized oils have epoxy group(s) per molecule and thereby exhibit high SP values, various animal or vegetable oils or fatty acid esters intrinsically having low SP values may be used as materials for epoxidation.

The epoxy group is a 3-membered cyclic ether (also referred to as oxirane or alkylene oxide) where an oxygen atom is bonded to two mutually bonded carbon atoms. Examples of the epoxidized oil include epoxidized soybean oil (ESO), epoxidized corn oil, epoxidized sunflower oil, epoxidized linseed oil, epoxidized canola oil, epoxidized rapeseed oil, epoxidized safflower oil, epoxidized tall oil, epoxidized wood oil, epoxidized fish oil, epoxidized beef tallow oil, epoxidized castor oil, epoxidized methyl stearate, epoxidized butyl stearate , epoxidized 2-ethyl hexyl stearate, epoxidized stearyl stearate, epoxidized soybean oil composed of 3,4-epoxycyclohexylmethyl 3,4-epoxycyclohexanecarboxylate, epoxidized propylene glycol dioleate, epoxidized palm oil, and epoxidized fatty acid methyl ester. Among them, the epoxidized tall oil is preferred.

Epoxidized oils can be prepared by various processes. For example, an epoxidized oil composed of a triglyceride backbone can be produced by oxidation of a vegetable oil or animal oil having unsaturated bond(s) in the fatty acid moiety with an appropriate oxidizing reagent or peroxide. Another epoxidized oil composed of a fatty acid ester other than the triglyceride backbone can be produced by a reaction of an animal-originated or plant-originated fatty acid having unsaturated bond(s) with monool or polyol for esterification, transesterification, or ester substitution to yield fatty acid ester and oxidation of the fatty acid ester with an appropriate oxidizing reagent or peroxide. It should be noted that these processes are merely exemplary. Any other preparation process may be employed or a commercially-available epoxidized oil may be used.

Cashew nut shell liquid is an oily fluid contained in the shells, produced as byproducts, during collection of edible kernels of the cashew nuts. The liquid contains, for example, anacardic acid, cardol, 2-methylcardol, and cardanol. Among them, cardanol and cardol are compounds that have aromatic rings to which hydroxyl groups and linear hydrocarbon groups are bonded. 2-Methylcardol is a methylated compound of cardol. Anacardic acid is a carboxylated compound of cardanol. All of them can be categorized into alkenyl-substituted phenols. The alkenyl group of alkenyl-substituted phenol is a $C_{15-18}$ aliphatic hydrocarbon group that has one to three unsaturated bonds. An unsaturated bond of the alkenyl group resides in the middle of a linear hydrocarbon group and is different from the ethylenically unsaturated bond. Various grades of cashew nut shell liquids are commercially available and can be used in the present invention. The cashew nut shell liquid products have some product lines corresponding to, for example, the purity, color, and odor of cardanol. Examples of the product include Cardolite® NX-2021, NX-2022, NX-2023D, NX-2023, Ultra LITE 2023, NX-2024, NX-2025, and NX-2026 available from Cardolite Corporation, and CNSL, LB-7000, and LB-7250 available from Tohoku Chemical Industries, Ltd.

Examples of modified derivatives of cashew nut shell liquid include those with various groups introduced in phenolic hydroxyl groups of alkenyl-substituted phenols contained in cashew nut shell liquid, those with various substituent groups introduced in unsaturated bonds of alkenyl groups, and those with oxidized and epoxidized unsaturated bonds of alkenyl groups. Various modified derivatives are commercially available and can be used in the present invention.

Among such modified derivatives, preferred are the compounds expressed by Formulae (1) to (4):

[Chem. 1]

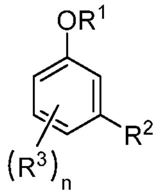

(1)

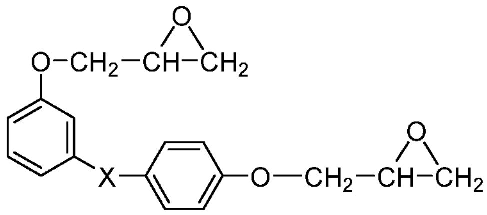

(2)

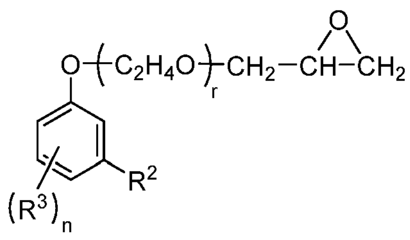

(3)

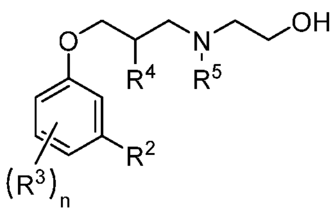

(4)

In Formula (1), $R^1$ represents a hydrogen atom, a glycidyl group, $-(CH_2)_mOH$ (m represents an integer of 1 to 3), $-(C_2H_4O)_p-H$ (p represents an integer of 1 to 15), or - $(CH_2CH(CH_3)O)_q-H$ (q represents an integer of 1 to 15); $R^2$ represents a $C_{15-18}$ aliphatic hydrocarbon group having zero to three unsaturated bonds that may be partially or entirely oxidized to form one to three epoxy rings; and each $R^3$ represents an alkyl group or carboxyl group with $OR^1$ and $C_{1-3}$, where n represents an integer of 0 to 4.

Examples of commercially available products expressed by Formula (1) include Cardolite® LITE 2020, Cardolite® NC-513, NC-510, GX-5166, GX-5167, GX-5170, GX-5248, GX-5190, GX-5191, and GX-2551 available from Cardolite Corporation. Among them, LITE 2020 is an alkenyl-substituted phenyl ether compound, where $R^1$ is - $CH_2CH_2OH$, $R^2$ is a $C_{15}$ alkenyl group, and n is 0; NC-513 is alkenyl-substituted phenyl glycidyl ether, where $R^1$ is a glycidyl group, $R^2$ is a $C_{15}$ alkenyl group, and n is 0; NC-510 is alkenyl-substituted phenol, where $R^1$ is a hydrogen atom, $R^2$ is a $C_{15}$ alkenyl group, and n is 0; GX-5166, 5167, and 5170 are alkenyl-substituted phenylethyl oxylate, where $R^1$ is $-(C_2H_4O)_p-H$, $R^2$ is a $C_{15}$ alkenyl group, n is 0, p = 7 in GX-5166, p = 9 in GX-5167, and p = 12 in GX-5170; and GX-5243, 5190, and 5191 are alkenyl-substituted phenylpropyloxylate, where $R^1$ is $-(CH_2CH(CH_3)O)_q-H$, $R^2$ is a $C_{15}$ alkenyl group, n is 0, q = 1 in GX-5243, q = 7 in GX-5190, and q = 9 in GX-5191. GX-2551 is a mixture of epoxidized cardanol compounds expressed by Formulae (5-1), (5-2), and (5-3), where $R^1$ is a glycidyl group, $R^2$ is a $C_{15}$ alkenyl group having one or more unsaturated bonds that are oxidized into an epoxy ring; and n is 0:

[Chem. 2]

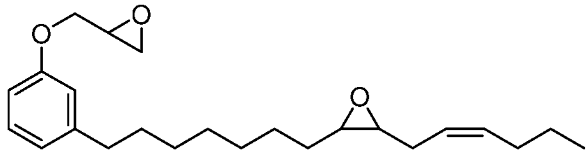

(5-1)

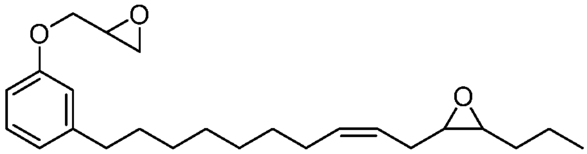

(5-2)

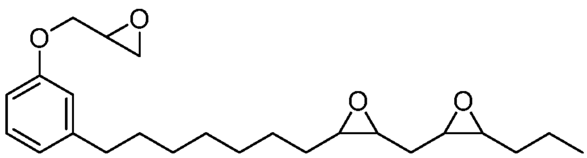

(5-3)

In Formula (2), X represents a $C_{15-18}$ linear or branched aliphatic hydrocarbon group having zero to three unsaturated bonds. An example of the commercially available products expressed by Formula (2) is Cardolite® NC-514 available from Cardolite Corporation.

In Formula (3), $R^2$, $R^3$, and n are the same as those in Formula (1) and r is an integer of 1 to 5. An example of the commercially available products expressed by Formula (3) is Cardolite® GX-2520 available from Cardolite Corporation.

In Formula (4), $R^2$, $R^3$, and n are the same as those in Formula (1), $R^4$ is a hydrogen atom or a hydroxyl group, and $R^5$ is a hydrogen atom or $-C_2H_4OH$. Examples of the commercially available products expressed by Formula (4) include Cardolite® GX-9301 and GX-9302 available from Cardolite Corporation.

Preferred polymers from cashew nut shell liquid are condensates of cashew nut shell liquid and/or modified derivatives thereof with formaldehyde. An example of the condensates can be expressed by Formula (6):

[Chem. 3]

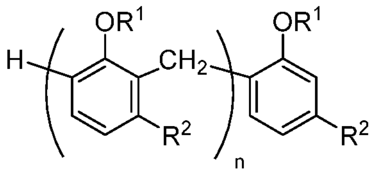

(6)

where each $R^1$ represents a hydrogen atom, $-(CH_2)_mOH$, or a glycidyl group; m represents an integer of 1 to 3; each $R^2$ represents a $C_{15-18}$ aliphatic hydrocarbon group having zero to three unsaturated bonds; and n is an integer of 1 or more.

Examples of the commercially available product expressed by Formula (6) include Cardolite® NC-547 and NX-4000 series available from Cardolite Corporation. NC-547 is a condensate of cardanol and a cardanol-modified derivative with formaldehyde and has a structure expressed by Formula (7-1), and NX-4000 series are condensates of cardanol with formaldehyde and each have a structure expressed by Formula (7-2):

[Chem. 4]

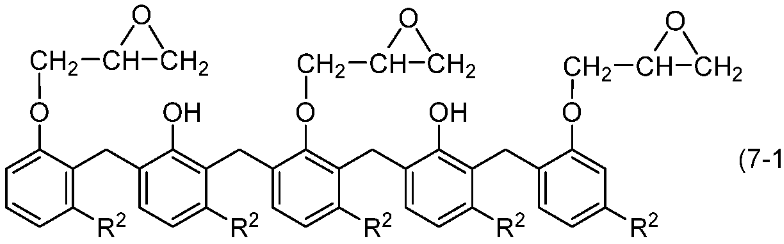

(7-1)

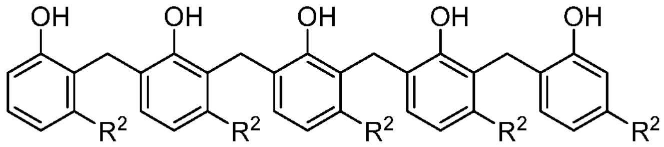

(7-2)

In Formulae (7-1) and (7-2), each $R^2$ represents a $C_{15-18}$ aliphatic hydrocarbon group having zero to three unsaturated bonds.

A specific liquid component is preferably an inedible oil or a modified product thereof. The inedible oil in this context generally refers to any oil that is not used for food. Even if the inedible oil has an SP value of less than 9.0 $(cal/cm^3)^{1/2}$, its modified products having an SP value of 9.0 $(cal/cm^3)^{1/2}$ or more are also categorized into the specific liquid component in the present invention.

Among these specific liquid components, preferred is at least one component selected from the group consisting of castor oil, cashew nut shell oil, tall oil, and modified products thereof.

Coloring Component

Examples of the coloring component includes yellow pigments, such as Disazo Yellow (Pigment Yellow 12, Pigment Yellow 13, Pigment Yellow 14, Pigment Yellow 17, and Pigment Yellow 1) and Hansa Yellow; magenta pigments, such as Brilliant Carmine 6B, Lake Red C, and Watching Red; cyanogen pigments, such as Phthalocyanine Blue, Phthalocyanine Green, and Alkali Blue; black pigments, such as carbon black; white pigments, such as titanium oxide; and metal powder, such as aluminum powder paste and bronze powder.

The nonlimiting content of the coloring component usually ranges from about 1 to 30 mass% of the entire ink composition. For preparation of a colored ink composition, a complementary color component, such as a different coloring component or an ink composition with a different color may be added.

Miscellaneous Components

The ink composition according to the present invention may further contain a miscellaneous component or components as required. Examples of the component include extender pigments, resin components, polymerization inhibitors, dispersants, salts, such as phosphates, waxes, such as polyethylene wax, olefinic wax, and Fischer-Tropsch wax, and alcohols.

The extender pigment imparts appropriate characteristics, such as printability and viscoelasticity, to ink compositions. Various extender pigments are available for preparation of the ink composition. Examples of the extender pigment include clay, kaolinite (kaolin), barium sulfate, magnesium sulfate, calcium carbonate, silicon oxide (silica), bentonite, talc, mica, and titanium oxide. The nonlimiting content of the extender pigment ranges from about 0 to 33 mass% of the entire ink composition.

The resin component imparts appropriate characteristics, such as printability and viscoelasticity, to an ink composition. Examples of the resin component are common resins that have been used in ink compositions for printing. Resin components having compatibility with monomer or oligomer are preferred. Examples of the resin component include styrene-acrylic, acrylic, alkyd, rosin-modified phenolic, rosin-modified maleic, rosin-modified alkyd, rosin-modified petroleum, rosin ester, petroleum resin-modified phenolic, vegetable oil-modified alkyd, and petroleum resins.

The resin component is added to the ink composition in a content of preferably 1 to 30 mass%, more preferably 1 to 20 mass%, further preferably 1 to 15 mass%. A resin content within such a range results in appropriate viscoelasticity

of the ink composition not causing misting and high hardening characteristics of the ink composition.

Examples of the preferred polymerization inhibitor include phenolic compounds, such as dibutylhydroxytoluene; tocopherol acetate, nitrosamine, benzotriazole, and hindered amines. Among them, dibutylhydroxytoluene is more preferred. The polymerization inhibitor added to the ink composition can prevent polymerization of the ink composition during storage and thus an increase in viscosity of the ink composition. The content of the polymerization inhibitor in the ink composition ranges, for example, from about 0.01 to 1 mass%.

A dispersant is used to sufficiently disperse the coloring component and extender pigment. Various dispersants are commercially available. Examples of the commercially available dispersants are DISPERBYK (product name) series available from BYK-Chemie Japan K.K.

The ink composition according to the present invention can be produced by any known process using the aforementioned components. The process involves the steps of, for example, mixing the components, kneading the mixed components with, for example, a bead mill or a triple-roll mill to disperse a pigment (in detail, a coloring component and an extender pigment), adding an additive (for example, a polymerization inhibitor, an alcohol, or a wax) as required, and adding a monomer component and an oil component to adjust the viscosity. A typical viscosity of the ink composition ranges from 10 to 70 Pa·s as measured with a Raleigh viscometer at 25°C. Other viscosities are also available.

Production of Printed Matter

A process for production of printed matter using the active energy ray-curable ink composition for offset printing according to the present invention also falls within the scope of the invention. The printed matter according to the invention can be produced by a common offset lithographic printing technique using the ink composition according to the invention. The offset lithographic printing may involve a wet process using a dampening solution or a water-free process that carries out printing using a dedicated lithographic plate instead of the dampening solution.

Undried printed matter produced by offset lithographic printing is instantaneously dried by irradiation with active energy rays. This is achieved by hardening of the ink composition on a printing paper sheet by irradiation with active energy rays. Although known active energy rays, such as electron beams and UV rays, may be employed, the UV rays are preferred in view of, for example, the installation cost and ready operation. The ink composition according to the present invention imparts high gloss to the printed matter. Thus, the resultant printed matter can be used in not only transmission of information or appreciation but also packaging.

EXAMPLES

The present invention will now be described in more detail by way of the following Examples. The invention should not be limited to the Examples in any way. In the following description, "%" indicates "mass%" and "part" "part by mass" unless otherwise stated. The SP value is represented in unit $(cal/ cm^3)^{1/2}$.

Synthetic Example 1

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of isophthalic acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 1. The resin of Synthetic Example 1 had an acid value of 13 mg KOH/g, an SP value of 9.74 as measured by turbidimetric titration, and a weight-average molecular weight (Mw) of 7000 as measured by gel permeation chromatography (GPC).

Synthetic Example 2

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of dehydroabietic acid, 50 parts of isophthalic acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 2. The resin of Synthetic Example 2 had an acid value of 13 mg KOH/g, an SP value of 9.70 as measured by turbidimetric titration, and a weight-average molecular weight (Mw) of 7000 as measured by GPC.

Synthetic Example 3

A reactor equipped with a stirrer, a reflux condenser, and a thermometer was filled with 800 parts of palm oil and 50 parts of pentaerythritol, which were held at 250°C for 1 hour for transesterification. After the mixture was cooled to 150°C, 160 parts of polymerization rosin, 50 parts of isophthalic acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 3. The resin of Synthetic Example 3 had an acid value of 12 mg KOH/g, an SP value of 9.73 as measured by turbidimetric titration, and a weight-average molecular weight (Mw) of 14000 as measured by GPC.

Synthetic Example 4

A reactor equipped with a stirrer, a reflux condenser, and a thermometer was filled with 800 parts of palm oil, 20 parts of pentaerythritol, and 16 parts of glycerol, which were held at 250°C for 1 hour for transesterification. After the mixture was cooled to 150°C, 160 parts of rosin, 50 parts of isophthalic acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 4. The resin of Synthetic Example 4 had an acid value of 12 mg KOH/g, an SP value of 9.74 as measured by turbidimetric titration, and a weight-average molecular weight (Mw) of 9000 as measured by GPC.

Synthetic Example 5

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of fumaric acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 5. The resin of Synthetic Example 5 had an acid value of 10 mg KOH/g, an SP value of 9.73 as measured by turbidimetric titration, and a weight-average molecular weight (Mw) of 8000 as measured by GPC.

Synthetic Example 6

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of 1,2-cyclohexenedicarboxylic acid, and xylene for reflux were added to the mixture. The mixture was gradually heated to 250°C and then held at the temperature for 6 hours for condensation polymerization. The xylene solvent was distilled away for 3 hours under reduced pressure, to yield a resin of Synthetic Example 6. The resin of Synthetic Example 6 had an acid value of 11 mg KOH/g, an SP value of 9.74 as measured by turbidimetric titration, and a weight-average molecular weight (Mw) of 8000 as measured by GPC.

Synthetic Example 7

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of 1,2-cyclohexenedicarboxylic acid, and xylene for reflux were added to the mixture. The mixture was gradually heated to 250°C and then held at the temperature for 6 hours for condensation polymerization. Benzoic acid (10 parts) was then added to the mixture for further condensation polymerization at 250°C for 1 hour. The xylene solvent was distilled away for 3 hours under reduced pressure, to yield a resin of Synthetic Example 7. The resin of Synthetic Example 7 had an acid value of 11 mg KOH/g, an SP value of 9.73 as measured by turbidimetric titration, and a weight-average molecular weight (Mw) of 6000 as measured by GPC.

Synthetic Example 8

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of 1,2-cyclohexenedicarboxylic acid, and xylene for reflux were added to the mixture. The mixture was gradually heated to 250°C and then held at the temperature for 6 hours for condensation polymerization. Benzoic acid (10 parts) was then added to the mixture for further condensation polymerization at 250°C

for 1 hour. The xylene solvent was distilled away for 3 hours under reduced pressure, to yield a resin of Synthetic Example 8. The resin of Synthetic Example 8 had an acid value of 11 mg KOH/g, an SP value of 9.63 as measured by turbidimetric titration, and a weight-average molecular weight (Mw) of 8000 as measured by GPC.

Synthetic Example 9

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of isophthalic acid, 10 parts of 1,2-cyclohexenedicarboxylic acid, and xylene for reflux were added to the mixture. The mixture was gradually heated to 250°C and then held at the temperature for 12 hours for condensation polymerization. The xylene solvent was distilled away for 3 hours under reduced pressure, to yield a resin of Synthetic Example 9. The resin of Synthetic Example 9 had an acid value of 6 mg KOH/g, an SP value of 9.73 as measured by turbidimetric titration, and a weight-average molecular weight (Mw) of 19000 as measured by GPC.

Synthetic Example 10

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin, 50 parts of fumaric acid, 10 parts of 1,2-cyclohexenedicarboxylic acid, and xylene for reflux were added to the mixture. The mixture was gradually heated to 250°C and then held at the temperature for 12 hours for condensation polymerization. The xylene solvent was distilled away for 3 hours under reduced pressure, to yield a resin of Synthetic Example 10. The resin of Synthetic Example 10 had an acid value of 5 mg KOH/g, an SP value of 9.74 as measured by turbidimetric titration, and a weight-average molecular weight (Mw) of 21000 as measured by GPC.

Synthetic Example 11

A reactor equipped with a stirrer, a reflux condenser, and a thermometer was filled with 800 parts of palm oil. After the palm oil was heated to 150°C, 160 parts of rosin, 50 parts of 1,2-cyclohexenedicarboxylic acid, and xylene for reflux were added to the palm oil. The mixture was gradually heated to 250°C and then held at the temperature for 12 hours for condensation polymerization. The xylene solvent was distilled away for 3 hours under reduced pressure, to yield a resin of Synthetic Example 11. The resin of Synthetic Example 11 had an acid value of 12 mg KOH/g, an SP value of 9.74 as measured by turbidimetric titration, and a weight-average molecular weight (Mw) of 9000 as measured by GPC.

Synthetic Example 12

A reactor equipped with a stirrer, a reflux condenser, and a thermometer was filled with 800 parts of soybean oil. After the soybean oil was heated to 150°C, 160 parts of rosin, 50 parts of 1,2-cyclohexenedicarboxylic acid, and xylene for reflux were added to the soybean oil. The mixture was gradually heated to 250°C and then held at the temperature for 12 hours for condensation polymerization. The xylene solvent was distilled away for 3 hours under reduced pressure, to yield a resin of Synthetic Example 12. The resin of Synthetic Example 12 had an acid value of 10 mg KOH/g, an SP value of 9.45 as measured by turbidimetric titration, and weight-average molecular weight (Mw) of 8000 as measured by GPC.

Synthetic Example 13

A reactor equipped with a stirrer, a reflux condenser, and a thermometer was filled with 800 parts of palm oil. After the palm oil was heated to 150°C, 160 parts of disproportionated rosin, 50 parts of 1,2-cyclohexenedicarboxylic acid, and xylene for reflux were added to the palm oil. The mixture was gradually heated to 250°C and then held at the temperature for 12 hours for condensation polymerization. The xylene solvent was distilled away for 3 hours under reduced pressure, to yield a resin of Synthetic Example 13. The resin of Synthetic Example 13 had an acid value of 12 mg KOH/g, an SP value of 9.76 as measured by turbidimetric titration, and a weight-average molecular weight (Mw) of 8000 as measured by GPC.

Synthetic Example 14

A reactor equipped with a stirrer, a reflux condenser, and a thermometer was filled with 800 parts of palm oil. After the palm oil was heated to 150°C, 160 parts of rosin, 50 parts of fumaric acid, and xylene for reflux were added to

the palm oil. The mixture was gradually heated to 250°C and then held at the temperature for 12 hours for condensation polymerization. The xylene solvent was distilled away for 3 hours under reduced pressure, to yield a resin of Synthetic Example 14. The resin of Synthetic Example 14 had an acid value of 10 mg KOH/g, an SP value of 9.74 as measured by turbidimetric titration, and a weight-average molecular weight (Mw) of 9000 as measured by GPC.

Synthetic Example 15

A reactor equipped with a stirrer, a reflux condenser, and a thermometer was filled with 800 parts of palm oil. After the palm oil was heated to 150°C, 160 parts of rosin, 50 parts of fumaric acid, and xylene for reflux were added to the palm oil. The mixture was gradually heated to 250°C and then held at the temperature for 12 hours for condensation polymerization. Benzoic acid (10 parts) was then added to the mixture for further condensation polymerization at 250°C for 1 hour. The xylene solvent was distilled away for 3 hours under reduced pressure, to yield a resin of Synthetic Example 15. The resin of Synthetic Example 15 had an acid value of 11 mg KOH/g, an SP value of 9.73 as measured by turbidimetric titration, and a weight-average molecular weight (Mw) of 8000 as measured by GPC.

Synthetic Example 16

A reactor equipped with a stirrer, a reflux condenser, and a thermometer was filled with 800 parts of soybean oil. After the soybean oil was heated to 150°C, 160 parts of rosin, 50 parts of fumaric acid, and xylene for reflux were added to the soybean oil. The mixture was gradually heated to 250°C and then held at the temperature for 12 hours for condensation polymerization. Benzoic acid (10 parts) was then added to the mixture for further condensation polymerization at 250°C for 1 hour. The xylene solvent was distilled away for 3 hours under reduced pressure, to yield a resin of Synthetic Example 16. The resin of Synthetic Example 16 had an acid value of 11 mg KOH/g, an SP value of 9.62 as measured by turbidimetric titration, and a weight-average molecular weight (Mw) of 7000 as measured by GPC.

Comparative Synthetic Example 1

A reactor equipped with a stirrer, a reflux condenser, and a thermometer was filled with 800 parts of palm oil and 36 parts of pentaerythritol, which were held at 250°C for 1 hour for transesterification. After the mixture was cooled to 150°C, 160 parts of rosin and xylene for reflux were added to the mixture. The mixture was gradually heated to 250°C and then held at the temperature for 12 hours for condensation polymerization. The xylene solvent was distilled away for 3 hours under reduced pressure, to yield a resin of Comparative Synthetic Example 1. The resin of Comparative Synthetic Example 1 had an acid value of 21 mg KOH/g, an SP value of 8.84 as measured by turbidimetric titration, and a weight-average molecular weight (Mw) of 5000 as measured by GPC.

Comparative Synthetic Example 2

A reactor equipped with a stirrer, a reflux condenser, and a thermometer was filled with 800 parts of soybean oil and 36 parts of pentaerythritol, which were held at 250°C for 1 hour for transesterification. After the mixture was cooled to 150°C, 160 parts of rosin and xylene for reflux were added to the mixture. The mixture was gradually heated to 250°C and then held at the temperature for 12 hours for condensation polymerization. The xylene solvent was distilled away for 3 hours under reduced pressure, to yield a resin of Comparative Synthetic Example 2. The resin of Comparative Synthetic Example 2 had an acid value of 18 mg KOH/g, an SP value of 8.89 as measured by turbidimetric titration, and a weight-average molecular weight (Mw) of 7000 as measured by GPC.

Comparative Synthetic Example 3

A reactor equipped with a stirrer, a reflux condenser, and a thermometer was filled with 800 parts of palm oil, 160 parts of rosin, and 36 parts of pentaerythritol, and xylene for reflux. The mixture was gradually heated to 250°C and then held at the temperature for 12 hours for condensation polymerization. The xylene solvent was distilled away for 3 hours under reduced pressure, to yield a resin of Comparative Synthetic Example 3. The resin of Comparative Synthetic Example 3 had an acid value of 17 mg KOH/g, an SP value of 8.91 as measured by turbidimetric titration, and a weight-average molecular weight (Mw) of 8000 as measured by GPC.

Comparative Synthetic Example 4

A reactor equipped with a stirrer, a reflux condenser, and a thermometer was filled with 800 parts of soybean oil, 160 parts of rosin, 36 parts of pentaerythritol, and xylene for reflux. The mixture was gradually heated to 250°C and

then held at the temperature for 12 hours for condensation polymerization. The xylene solvent was distilled away for 3 hours under reduced pressure, to yield a resin of Comparative Synthetic Example 4. The resin of Comparative Synthetic Example 4 had an acid value of 18 mg KOH/g, an SP value of 8.85 as measured by turbidimetric titration, and a weight-average molecular weight (Mw) of 8000 as measured by GPC.

Preparation of Varnish

A reactor equipped with a condenser tube was filled with 80 parts of the resin of Synthetic Example 1, 19 parts of di(trimethylolpropane) triacrylate (DI-TMPTA), and 1 part of dibutylhydroxytoluene (BHT), which were heated with stirring at 100°C for 1 hour to prepare Varnish 1. Varnishes 2 to 16 were also prepared from the resins of Synthetic Examples 2 to 16 through the same procedure. These varnishes were transparent and had high compatibility. The varnishes had a viscosity generally ranging from 1.9 to 5.4 Pa s. The resins of Comparative Synthetic Examples 1 to 4 had low compatibility and thus did not yield vanishes.

Preparation of Active Energy Ray-Curable Ink Composition for Offset Printing

Varnishes 1 to 16 prepared by the aforementioned steps were used to prepare Inks 1A to 16A, 1B to 16B, 1C to 16C, 1D to 16D, and 1E to 16E. The numeric portions 1 to 16 without alphabetic suffixes correspond to the identification numbers of the varnishes used for preparation of ink compositions. Each ink composition was prepared through the following steps: A mixture of 50 parts of varnish, 15 parts of carbon black (product name: #60, available from Mitsubishi Chemical Corporation), 7 parts of Irgacure 907 (available from BASF), 3 parts of 4,4'-bis(diethylamino)benzophenone (EAB), 20 parts of liquid component was kneaded with a triple-roll mill at 40°C until the particle size was 5.0 μm or less. TMPTA (5 parts) was added to the mixture as required to adjust the viscosity of the mixture to about 40Pa s, resulting in an ink composition. The liquid component was (A) castor oil having an SP value of 9.7, (B) CNSL having an SP value of 10.1, (C) LITE 2020 having an SP value of 9.72, (D) UL-513 having an SP value of 9.31, or (E) soybean oil having an SP value of less than 9.0. Among them, CNSL, LITE 2020, and UL-513 belong to Cardolite® series available from Cardolite Corporation and are cashew nut shell oil or modified products thereof. The alphabetic suffixes (A to E) of the ink numbers respectively correspond to feedstocks (A) to (E) of the liquid component. For example, "Ink 2C" represents a composition prepared from Varnish 2 and liquid component (C) LITE 2020. Inks 1E to 16E prepared from soybean oil had low compatibility, which caused isolation of the component, and did not yield ink compositions. Inks 1E to 16E were not subjected to the following evaluations:

Measurement of Physical Properties

The viscosity and the slope of flowability of each of Inks 1A to 16A, 1B to 16B, 1C to 16C, and 1D to 16D was measured at 25°C with a Raleigh viscometer in accordance with JIS K5101. Tables 1 to 8 show the results on columns "Viscosity" and "Slope".

Evaluation of Emulsifying Properties

Inks 1A to 16A, 1B to 16B, 1C to 16C, and 1D to 16D (each by 1 g) were kneaded with a rotating roller of a desktop homogenizer (available from TAIYO KIKAI Ltd.) in the presence of 1.5% dampening solution (KG-502 available from Komori Corporation). The emulsification rates (%) of the inks were measured after 0.5 minutes. Tables 1 to 8 show the results on the column "Emulsification Rate".

Evaluation of Hardening Characteristics

Inks 1A to 16A, 1 B to 16B, 1C to 16C, and 1D to 16D (each by 0.1 m L/204 $cm^2$) were extended on art paper sheets (Toku Art 110K available from Mitsubishi Paper Mills Limited) through divided rolls of an RI-2 color proof tester (available from Akira Seisakusho) to prepare test pieces. The test pieces were then irradiated with UV rays from a metal halide lamp (focal length: 13 cm; a single-lamp condensing type, available from Heraeus K.K.) with an output density of 160 W/cm. The hardening rates of the test pieces that were free of tackiness were evaluated by touching with a finger based on the following criteria with three ranks: Tables 1 to 8 show the results on the column "Hardening Characteristics".

Criteria

Good: hardening rate of 100 m/min or more
Insufficient: hardening rate of 60 m/min or more and less than 100 m/min
Unacceptable: hardening rate of less than 60 m/min

Evaluation of Gloss

The gloss of each tack-free test piece after the evaluation of the hardening characteristics was measured at a reflection angle of 60° with a digital glossmeter (available from MURAKAMI COLOR RESEARCH LABORATORY). Tables 1 to 8 show the results on the column "Gloss".

Evaluation of Smear on Printing Paper Sheet

Inks 1A to 16A, 1Bto 16B, 1C to 16C, and 1D to 16D were used in a real printing process with a printer to observe smears on printing paper sheets. The printing process used a printer (product name: LITHRONE LS426 available from Komori Corporation), a dampening solution (1.5%; product name: KG-502 available from Komori Corporation), and printing paper sheets {Toku Art available from Mitsubishi Paper Mills Limited; size: octavo (636 × 939 mm)}. The water dial of the printer was set to a level 5-point lower than the standard volume of water to evaluate the smear on a printing paper sheet. The criteria of evaluation are described below. Tables 1 to 8 show the results on the column "Smear".

Good: no smear found on printing paper sheet
Unacceptable: smear found on printing paper sheet

[Table 1]

| Liquid component: castor oil (SP value: 9.7) | | | | | | | | |
|---|---|---|---|---|---|---|---|---|
| Ink No. | 1A | 2A | 3A | 4A | 5A | 6A | 7A | 8A |
| Viscosity (Pa.s) | 42 | 42 | 39 | 37 | 42 | 42 | 40 | 40 |
| Slope | 8.5 | 8.8 | 9.5 | 9.5 | 7.6 | 9.3 | 9.4 | 9.4 |
| Emulsification rate (%) | 14.1 | 16.0 | 17.3 | 19.2 | 14.8 | 17.4 | 14.30 | 15.0 |
| Hardening characteristics | Good | Good | Good | Good | Good | Good | Good | Good |
| Gloss | 35 | 37 | 38 | 38 | 40 | 39 | 38 | 41 |
| Smear | Good | Good | Good | Good | Good | Good | Good | Good |

[Table 2]

| Liquid component: castor oil (SP value: 9.7) | | | | | | | | |
|---|---|---|---|---|---|---|---|---|
| Ink No. | 9A | 10A | 11A | 12A | 13A | 14A | 15A | 16A |
| Viscosity (Pa.s) | 44 | 40 | 40 | 39 | 40 | 39 | 40 | 40 |
| Slope | 7.7 | 9.3 | 9.3 | 9.4 | 7.6 | 7.0 | 9.3 | 9.4 |
| Emulsification rate (%) | 17.0 | 14.6 | 16.5 | 16.7 | 15.6 | 16.3 | 14.7 | 16.4 |
| Hardening characteristics | Good | Good | Good | Good | Good | Good | Good | Good |
| Gloss | 36 | 40 | 38 | 42 | 42 | 41 | 38 | 37 |
| Smear | Good | Good | Good | Good | Good | Good | Good | Good |

[Table 3]

| Liquid component: CNSL (SP value: 10.1) | | | | | | | | |
|---|---|---|---|---|---|---|---|---|
| Ink No. | 1B | 2B | 3B | 4B | 5B | 6B | 7B | 8B |
| Viscosity (Pa.s) | 40 | 41 | 42 | 39 | 42 | 43 | 42 | 43 |
| Slope | 8.9 | 9.3 | 9.4 | 9.5 | 7.8 | 9.5 | 9.5 | 9.3 |
| Emulsification rate (%) | 14.8 | 16.0 | 17.5 | 19.6 | 15.0 | 18.4 | 15.0 | 15.0 |
| Hardening characteristics | Good | Good | Good | Good | Good | Good | Good | Good |
| Gloss | 36 | 38 | 37 | 38 | 40 | 38 | 37 | 42 |
| Smear | Good | Good | Good | Good | Good | Good | Good | Good |

[Table 4]

| Liquid component: CNSL (SP value: 10.1) | | | | | | | | |
|---|---|---|---|---|---|---|---|---|
| Ink No. | 9B | 10B | 11B | 12B | 13B | 14B | 15B | 16B |
| Viscosity (Pa.s) | 43 | 40 | 40 | 40 | 39 | 39 | 39 | 40 |
| Slope | 7.6 | 9.3 | 9.5 | 9.5 | 7.5 | 6.8 | 9.2 | 9.1 |
| Emulsification rate (%) | 16.4 | 15.6 | 15.8 | 16.1 | 15.0 | 17.0 | 14.8 | 16.5 |
| Hardening characteristics | Good | Good | Good | Good | Good | Good | Good | Good |
| Gloss | 37 | 38 | 39 | 42 | 41 | 41 | 39 | 38 |
| Smear | Good | Good | Good | Good | Good | Good | Good | Good |

[Table 5]

| Liquid component: LITE 2020 (SP value: 9.72) | | | | | | | | |
|---|---|---|---|---|---|---|---|---|
| Ink No. | 1C | 2C | 3C | 4C | 5C | 6C | 7C | 8C |
| Viscosity (Pa.s) | 40 | 40 | 40 | 39 | 41 | 43 | 42 | 42 |
| Slope | 8.9 | 9.4 | 9.5 | 9.5 | 7.1 | 9.3 | 9.5 | 9.2 |
| Emulsification rate (%) | 14.2 | 15.2 | 17.5 | 18.3 | 15.2 | 18.1 | 15.0 | 15.0 |
| Hardening characteristics | Good | Good | Good | Good | Good | Good | Good | Good |
| Gloss | 35 | 37 | 37 | 40 | 35 | 39 | 37 | 42 |
| Smear | Good | Good | Good | Good | Good | Good | Good | Good |

[Table 6]

| Liquid component: LITE 2020 (SP value: 9.72) | | | | | | | | |
|---|---|---|---|---|---|---|---|---|
| Ink No. | 9C | 10C | 11C | 12C | 13C | 14C | 15C | 16C |
| Viscosity (Pa.s) | 42 | 39 | 40 | 41 | 39 | 39 | 39 | 40 |
| Slope | 7.3 | 9.5 | 9.2 | 9.4 | 7.3 | 6.8 | 9.4 | 9.1 |
| Emulsification rate (%) | 15.8 | 15.3 | 16.8 | 16.5 | 15.0 | 16.4 | 15.8 | 16.1 |
| Hardening characteristics | Good | Good | Good | Good | Good | Good | Good | Good |
| Gloss | 38 | 38 | 40 | 42 | 40 | 41 | 39 | 38 |
| Smear | Good | Good | Good | Good | Good | Good | Good | Good |

[Table 7]

| Liquid component: UL-513 (SP value: 9.31) | | | | | | | | |
|---|---|---|---|---|---|---|---|---|
| Ink No. | 1D | 2D | 3D | 4D | 5D | 6D | 7D | 8D |
| Viscosity (Pa.s) | 40 | 42 | 39 | 39 | 42 | 41 | 44 | 44 |
| Slope | 8.5 | 9.3 | 9.0 | 9.5 | 7.2 | 9.5 | 9.3 | 9.4 |
| Emulsification rate (%) | 15.0 | 16.2 | 17.2 | 19.2 | 16.0 | 17.2 | 15.3 | 15.5 |
| Hardening characteristics | Good | Good | Good | Good | Good | Good | Good | Good |
| Gloss | 38 | 37 | 37 | 38 | 40 | 39 | 38 | 41 |
| Smear | Good | Good | Good | Good | Good | Good | Good | Good |

[Table 8]

| Liquid component: UL-513 (SP value: 9.31) | | | | | | | | |
|---|---|---|---|---|---|---|---|---|
| Ink No. | 9D | 10D | 11D | 12D | 13D | 14D | 15D | 16D |
| Viscosity (Pa.s) | 42 | 39 | 40 | 40 | 38 | 39 | 39 | 40 |
| Slope | 7.2 | 9.5 | 9.5 | 9.2 | 7.7 | 6.5 | 9.2 | 9.3 |
| Emulsification rate (%) | 16.1 | 15.3 | 16.5 | 16.8 | 14.6 | 16.4 | 15.2 | 17.0 |
| Hardening characteristics | Good | Good | Good | Good | Good | Good | Good | Good |
| Gloss | 38 | 39 | 40 | 41 | 40 | 43 | 40 | 38 |
| Smear | Good | Good | Good | Good | Good | Good | Good | Good |

As Tables 1 to 8 demonstrate, the ink composition according to the present invention, which contains a rosin-modified alkyd resin and a liquid component each having a predetermined SP value, exhibits physical properties, emulsifying properties, a hardening rate, and a gloss that are practical and does not cause a smear in the actual printing process. In contrast, the rosin-modified alkyd resins having SP values lower than the predetermined SP value (in Comparative Synthetic Examples 1 to 4) or the liquid components having SP values lower than the predetermined SP value (in Inks 1E to 16E) have insufficient compatibility, cause, for example, isolation of components and thus cannot be used in an ink composition.

## Claims

**1.** An active energy ray-curable ink composition for offset printing, comprising:

a compound having an ethylenically unsaturated bond;
a rosin-modified alkyd resin;
a specific liquid component; and
a photopolymerization initiator, wherein
the rosin-modified alkyd resin is a condensation polymer of a polyhydric alcohol with an acid component comprising a resin acid, a fatty acid, and a polybasic acid, and has an solubility parameter (SP value) of 9.0 to 11.0 (cal/ $cm^3)^{1/2}$ as measured by turbidimetric titration and an acid value of 1 to 50 mg KOH/g, wherein the rosin-modified alkyd resin has an oil length of 30 to 85, the oil length indicating the ratio of the mass of the fatty acid moiety to the mass of the entire rosin-modified alkyd resin, and
the specific liquid component has no ethylenically unsaturated bond and is an animal-originated or plant-originated oil and/or a modified product thereof having an SP value of 9.0 (cal/ $cm^3)^{1/2}$ to less than 11.0 (cal/ $cm^3)^{1/2}$, the specific liquid component being present in a content of 1 to 80 mass% of the entire composition.

**2.** The active energy ray-curable ink composition for offset printing according to claim 1, wherein the specific liquid

component is present in a content of 1 to 30 mass% of the entire composition.

3. The active energy ray-curable ink composition for offset printing according to claim 1 or 2, wherein the specific liquid component is an inedible oil and/or a modified product thereof.

4. The active energy ray-curable ink composition for offset printing according to claim 3, wherein the inedible oil and/or the modified product thereof is at least one selected from the group consisting of castor oil, cashew nut shell oil, tall oil, and modified products thereof.

5. The active energy ray-curable ink composition for offset printing according to any one of claims 1 to 4, wherein the rosin-modified alkyd resin comprises a $C_{8-16}$ fatty acid.

6. The active energy ray-curable ink composition for offset printing according to any one of claims 1 to 5, wherein the fatty acid in the rosin-modified alkyd resin is derived from palm oil or palm kernel oil.

7. The active energy ray-curable ink composition for offset printing according to any one of claims 1 to 6, wherein the rosin-modified alkyd resin has a weight-average molecular weight of 1000 to 70000.

8. A method of producing a printed product using the active energy ray-curable ink composition for offset printing according to any one of claims 1 to 7.

**Patentansprüche**

1. Aktive Energiestrahlen-härtbare Tintenzusammensetzung für den Offsetdruck, umfassend:

   eine Verbindung mit einer ethylenisch ungesättigten Bindung;
   ein kolophonium-modifiziertes Alkydharz;
   eine spezifische flüssige Komponente; und
   einen Photopolymerisationsinitiator, wobei
   das kolophonium-modifizierte Alkydharz ein Kondensationspolymer eines mehrwertigen Alkohols mit einer Säurekomponente ist, umfassend eine Harzsäure, eine Fettsäure und eine mehrbasige Säure, und einen Löslichkeitsparameter (SP-Wert) von 9,0 bis 11,0 $(cal/cm^3)^{1/2}$, wie gemessen durch turbidimetrische Titration, und eine Säurezahl von 1 bis 50 mg KOH/g hat, wobei das kolophonium-modifizierte Alkydharz eine Öllänge von 30 bis 85 hat, die Öllänge angebend das Verhältnis der Masse des Fettsäureanteils zur Masse des gesamten kolophonium-modifizierten Alkydharzes, und
   die spezifische flüssige Komponente keine ethylenisch ungesättigte Bindung hat und ein Öl tierischen oder pflanzlichen Ursprungs und/oder ein modifiziertes Produkt davon mit einem SP-Wert von 9,0 $(cal/ cm^3)^{1/2}$ bis weniger als 11,0 $(cal/ cm^3)^{1/2}$ ist, wobei die spezifische flüssige Komponente in einem Anteil von 1 bis 80 Masse-% der gesamten Zusammensetzung vorhanden ist.

2. Aktive Energiestrahlen-härtbare Tintenzusammensetzung für den Offsetdruck nach Anspruch 1, wobei die spezifische flüssige Komponente in einem Gehalt von 1 bis 30 Masse-% der gesamten Zusammensetzung vorhanden ist.

3. Aktive Energiestrahlen-härtbare Tintenzusammensetzung für den Offsetdruck nach Anspruch 1 oder 2, wobei die spezifische flüssige Komponente ein ungenießbares Öl und/oder ein modifiziertes Produkt davon ist.

4. Aktive Energiestrahlen-härtbare Tintenzusammensetzung für den Offsetdruck nach Anspruch 3, wobei das ungenießbare Öl und/oder das modifizierte Produkt davon mindestens eines ist, ausgewählt aus der Gruppe bestehend aus Rizinusöl, Cashewnussschalenöl, Tallöl, und modifizierten Produkten davon.

5. Aktive Energiestrahlen-härtbare Tintenzusammensetzung für den Offsetdruck nach einem der Ansprüche 1 bis 4, wobei das kolophonium-modifizierte Alkydharz eine $C_{8-16}$-Fettsäure umfasst.

6. Aktive Energiestrahlen-härtbare Tintenzusammensetzung für den Offsetdruck nach einem der Ansprüche 1 bis 5, wobei die Fettsäure in dem kolophonium-modifizierten Alkydharz aus Palmöl oder Palmkernöl stammt.

7. Aktive Energiestrahlen-härtbare Tintenzusammensetzung für den Offsetdruck nach einem der Ansprüche 1 bis 6,

wobei das kolophonium-modifizierte Alkydharz ein gewichtsmittleres Molekulargewicht von 1000 bis 70000 hat.

**8.** Verfahren zum Herstellen eines Druckerzeugnisses unter Verwendung der aktive Energiestrahlen-härtbaren Tintenzusammensetzung für den Offsetdruck nach einem der Ansprüche 1 bis 7.

**Revendications**

**1.** Composition d'encre durcissable par rayons d'énergie active pour impression offset, comprenant :

un composé ayant une liaison éthyléniquement insaturée ;
une résine alkyde modifiée par de la colophane ;
un composant liquide spécifique ; et
un initiateur de photopolymérisation,
la résine alkyde modifiée par de la colophane étant un polymère de condensation d'un alcool polyhydrique avec un composant acide comprenant un acide résinique, un acide gras et un acide polybasique, et ayant un paramètre de solubilité (valeur SP) de 9,0 à 11,0 $(cal/\ cm^3)^{1/2}$ tel que mesuré par titrage turbidimétrique et un indice d'acide de 1 à 50 mg KOH/g, la résine alkyde modifiée par de la colophane ayant une longueur d'huile de 30 à 85, la longueur d'huile indiquant le rapport de la masse de le fragment acide gras par rapport à la masse de la totalité de la résine alkyde modifiée par la colophane, et
le composant liquide spécifique n'a pas de liaison éthyléniquement insaturée et est une huile d'origine animale ou végétale et/ou un produit modifié de celle-ci ayant une valeur SP de 9,0 $(cal/\ cm^3)^{1/2}$ à moins de 11,0 $(cal/\ cm^3)^{1/2}$, le composant liquide spécifique étant présent à une teneur de 1 à 80 % en masse de la composition entière.

**2.** Composition d'encre durcissable par rayons d'énergie active pour impression offset selon la revendication 1, dans laquelle le composant liquide spécifique est présent dans une teneur de 1 à 30 % en masse de la composition entière.

**3.** Composition d'encre durcissable par rayons d'énergie active pour impression offset selon la revendication 1 ou 2, dans laquelle le composant liquide spécifique est une huile non comestible et/ou un produit modifié de celle-ci.

**4.** Composition d'encre durcissable par rayons d'énergie active pour impression offset selon la revendication 3, dans laquelle l'huile non comestible et/ou le produit modifié de celle-ci est au moins une huile sélectionnée dans le groupe constitué de l'huile de ricin, de l'huile de coque de noix de cajou, du tallöl, et leurs produits modifiés.

**5.** Composition d'encre durcissable par rayons d'énergie active pour impression offset selon l'une quelconque des revendications 1 à 4, dans laquelle la résine alkyde modifiée par de la colophane comprend un acide gras en $C_{8-16}$.

**6.** Composition d'encre durcissable par rayons d'énergie active pour impression offset selon l'une quelconque des revendications 1 à 5, dans laquelle l'acide gras dans la résine alkyde modifiée par la colophane est dérivé de l'huile de palme ou de l'huile de palmiste.

**7.** Composition d'encre durcissable par rayons d'énergie active pour impression offset selon l'une quelconque des revendications 1 à 6, dans laquelle la résine alkyde modifiée par de la colophane a un poids moléculaire moyen en poids de 1 000 à 70 000.

**8.** Procédé de production d'un produit imprimé utilisant la composition d'encre durcissable par rayons d'énergie active pour impression offset selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012102217 A
- JP 4649952 B


### Non-patent literature cited in the description


- **K. W. SUH ; J. M. CORBETT.** *J. Appl. Polym. Sci.,* 1968, vol. 12, 2359